Europäisches Patentamt

European Patent Office

Office européen des brevets

(11) Veröffentlichungsnummer : **0 130 320**
**B1**

(12) **EUROPÄISCHE PATENTSCHRIFT**

(45) Veröffentlichungstag der Patentschrift :
09.09.87

(51) Int. Cl.⁴ : **G 01 N 25/18**

(21) Anmeldenummer : **84105346.5**

(22) Anmeldetag : **11.05.84**

(54) **Verfahren und Vorrichtung zur Messung der Abschreckintensität von flüssigen Abschreckbädern.**

(30) Priorität : **03.06.83 DE 3320055**

(43) Veröffentlichungstag der Anmeldung :
**09.01.85 Patentblatt 85/02**

(45) Bekanntmachung des Hinweises auf die Patenterteilung : **09.09.87 Patentblatt 87/37**

(84) Benannte Vertragsstaaten :
**AT BE CH DE FR GB IT LI LU NL SE**

(56) Entgegenhaltungen :
**EP-A- 0 070 801**
**DE-A- 2 949 730**
**FR-A- 2 389 128**
**FR-A- 2 470 381**
**GB-A- 2 107 066**

(73) Patentinhaber : **Degussa Aktiengesellschaft**
**Weissfrauenstrasse 9**
**D-6000 Frankfurt am Main 1 (DE)**

(72) Erfinder : **Schumann, Erwin, Dipl.-Ing.**
**Atzelsgraben 12**
**D-6454 Bruchköbel (DE)**

## Beschreibung

Die Erfindung betrifft ein Verfahren und eine Vorrichtung zur Messung der Abschreckgeschwindigkeit von flüssigen Abschreckbädern, insbesondere von Salzbädern, durch Einbringen eines gegenüber der Badtemperatur erhitzten Prüfkörpers in das Bad.

Bei der Wärmebehandlung von Stählen stellt die Abschreckung nach dem Austenitisieren einen entscheidenen Abschnitt des Verfahrensablaufes dar. Die hierfür verwendeten Flüssigkeitsbäder, wie Öl- oder Wasserbäder, können dabei je nach ihrer Temperatur, Zusammensetzung, Badbewegung und etwaiger Verschlammung unterschiedliche Abschreckgeschwindigkeit besitzen.

Vor allem trifft dies für das sogenannte Warmbad zu, einer Salzschmelze aus Alkalinitraten und -nitriten.

Neben der Badbewegung und dem Schlammgehalt spielt hier der Wassergehalt der Salzschmelze eine entscheidende Rolle. Ein Wassergehalt von 1 % kann die Abschreckgeschwindigkeit z. B. auf das Zweifache steigern.

Die Prüfung der Abschreckgeschwindigkeit dieser Bäder ist deshalb unerläßlich, um die geforderten Härteergebnisse bei der Wärmebehandlung von Stählen zu erzielen. Die Methode der Prüfung beruhte bisher im wesentlichen auf der Nachahmung des Abschreckvorgangs. Ein Prüfkörper wird auf Härtetemperatur erhitzt und dann im Abschreckbad abgekühlt, wobei die Abkühlungszeit für eine festgelegte Temperaturspanne gemessen wird. Der Prüfkörper kann entweder sehr wärmekapazitätsarm und sehr gut wärmeleitend als Silberkugel ausgeführt sein oder als massiver Stahlkörper vorliegen, der sehr träge auf das Abschrecken reagiert. Diese Prüfmethode ist für eine kontinuierliche Überwachung der Abschreckintensität der Bäder sehr umständlich und praktisch unbrauchbar, wenn es darum geht, für einen Regler, der die Abschreckgeschwindigkeit z. B. durch Wasserzusatz, beeinflussen soll, einen unmittelbaren Meßwert zu erhalten.

So ist beispielsweise aus der GB-A-2 107 066 ein Verfahren zur Messung der Abschreckgeschwindigkeit in Abschreckbädern bekannt, bei dem ein vorgeheizter Probekörper vorgegebener Masse und Wärmeleitfähigkeit zusammen mit einem Temperaturmeßinstrument in das Bad eingebracht und der Temperaturverlauf gemessen wird. Für eine kontinuierliche Messung ist dieses Verfahren nicht brauchbar.

Es war daher Aufgabe der vorliegenden Erfindung, ein Verfahren und eine Vorrichtung zur Messung der Abschreckgeschwindigkeit von flüssigen Abschreckbädern, insbesondere von Salzbädern, zu schaffen, durch Einbringen eines gegenüber der Badtemperatur auf Übertemperatur erhitzten Prüfkörpers in das Bad, wobei die Messung schnell ansprechen, zu einer kontinuierlichen Überwachung geeignet sein und ein regelbares Signal als Meßgröße ergeben sollte.

Diese Aufgabe ist erfindungsgemäß dadurch gelöst, daß mittels einer regelbaren Heizung auf einer Teilfläche oder Prüfkörperoberfläche eine konstante Übertemperatur von 50 bis 700 °C aufgebracht und die für die Temperaturkonstanthaltung erforderliche Leistung als Maß für die Abschreckgeschwindigkeit verwendet wird.

Vorzugsweise beträgt die Übertemperatur der Teilfläche gegenüber der Badtemperatur 150 bis 400 °C, wobei sich auf Übertemperatur gebrachte Teilflächen in einer Größe von 0,1 bis 10 cm², insbesondere 1 bis 6 cm², als vorteilhaft erwiesen haben. Zur kontinuierlichen Messung ist es weiterhin von Vorteil, wenn die erhitzte Teilfläche sich auf einer ebenen Prüfkörperoberfläche befindet und diese schräg im Bad fest angeordnet ist.

Die Abschreckgeschwindigkeit der Flüssigkeitsbäder wird nach dem erfindungsgemäßen Verfahren mittels eines Prüfkörpers ermittelt, der einen « heißen Fleck » mit einer konstant gehaltenen Temperatur besitzt, die höher als die Badtemperatur liegt, wobei die zur Aufrechterhaltung der Übertemperatur des « heißen Flecks » notwendige Energie ein Maß für die Abschreckgeschwindigkeit tät des Bades liefert. Man erhält auf diese Weise ein sehr rasch zur Verfügung stehendes regelbares Signal, das für eine kontinuierliche Überwachung und Regelung der Abschreckgeschwindigkeit der Bäder bestens geeignet ist.

Dieses Verfahren wird einer Vorrichtung gemäß Anspruch 6 durchgeführt.

Vorzugsweise ist der Wärmeübertragungskörper mit einem Zapfen von geringerem Querschnitt versehen, dessen Stirnfläche die Wärmeübertragung auf das Prüfkörpergehäuse bewerkstelligt und den « heißen Fleck » erzeugt. Vorteilhaft ist es auch, wenn die regelbare Heizung zur Aufrechterhaltung der Übertemperatur des « heißen Flecks » innerhalb des Wärmeübertragungskörpers untergebracht wird. Die Größe der Stirnfläche des Wärmeübertragungskörpers, bzw. des Zapfens und damit des « heißen Flecks », liegt vorzugsweise im Bereich von 0,1 bis 10 cm², insbesondere im Bereich von 1 bis 6 cm².

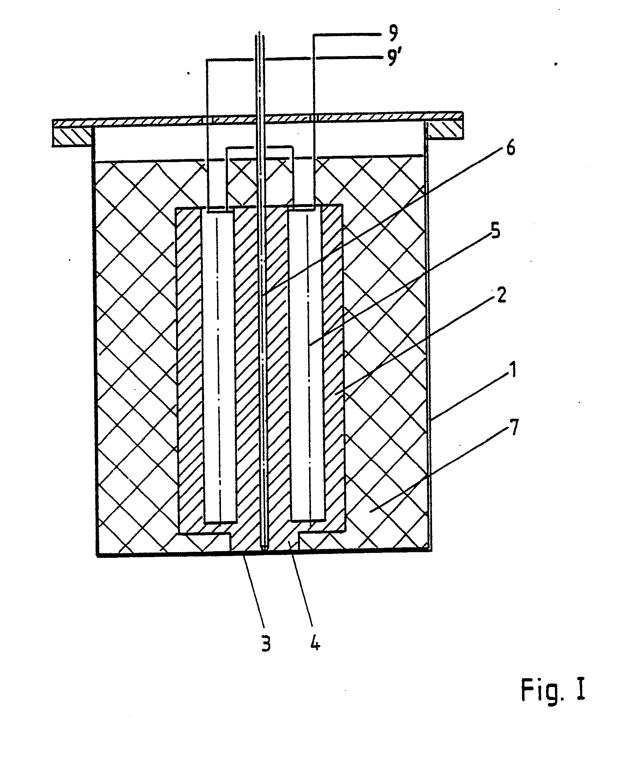

Die Abbildung zeigt schematisch einen Längsschnitt durch einen beispielhaften Prüfkörper. Der aus einem Metall mit vorzugsweise sehr hoher thermischer Leitfähigkeit (Cu oder Ag) bestehende Wärmeübertragungskörper (2) sitzt mit der Stirnfläche (3) des Zapfens (4) auf der Wandung des Prüfkörpergehäuses (1). Das vorteilhafterweise dünne Blech (ca 0,5 mm) des Prüfkörpergehäuses (1) ist von geringer Wärmeleitfähigkeit (z. B. Cr-Ni-Stahl) und mit der Stirnfläche (3) des Zapfens (4) gut wärmeleitend, z. B. durch Löten, verbunden. Die Größe der Stirnfläche (3) des Zapfens (4) bildet den « heißen Fleck ». Der Wärmeübertragungskörper (2) ist wärmeisoliert im Prüfkörpergehäuse untergebracht und wird beispielsweise durch regelbare Heizpatronen (5) oder Heizdrähte (9) beheizt. Die Temperatur des « heißen Flecks » (3) wird durch ein Thermoelement (6) gemessen. Selbstverständlich kann die Beheizung des Wärmeübertragungskörpers (2) auch von außen erfolgen, wobei der Wärmeübertragungskörper stets von einer Wärmeisolation (7) umgeben ist.

Die Registrierung und Messung der erforderlichen Heizleistung, um die Temperatur des « heißen Flecks » aufrechtzuerhalten, kann mit bekannten Geräten erfolgen. Das gleiche gilt für die Regelung der Abschreckgeschwindigkeit der Bäder, indem die Badparameter, die einen Einfluß auf die Abschreckgeschwindigkeit besitzen, bei Abweichung vom Sollwert entsprechend beeinflußt werden.

Der gegenüber dem Zapfen (4) wesentlich größere Querschnitt des Wärmeübertragungskörpers (2) erlaubt die Unterbringung einer relativ hohen thermischen Leistung im Prüfkörper und sorgt zusammen mit der sehr guten thermischen Leitfähigkeit des Materials für einen niedrigen Temperaturgradienten im Wärmeübertragungskörper (2). Die Größe des « heißen Flecks » wird durch den Querschnitt des Zapfens (4) bestimmt. Da das Prüfkörpergehäuse (1) vorteilhafterweise zumindest im Bereich des « heißen Flecks » eine geringe thermische Leitfähigkeit und Dicke besitzt, kann sich die Wärme radial nicht ausbreiten. Fast die gesamte dem Wärmeübertragungskörper zugeführte Energie wird somit über die Stirnfläche des Zapfens (4) an den « heißen Fleck » geführt und dort an das Bad abgegeben.

Versuche zur Messung der Abschreckgeschwindigkeit von Alkalinitratbädern von 160 °C wurden beispielsweise mit Prüfkörpern durchgeführt, die einen Zapfendurchmesser von 20 mm besaßen und im « heißen Fleck » mittels einer Heizung auf eine Temperatur von 500 °C gebracht worden waren, dh. auf eine Übertemperatur von 340 °C.

**Patentansprüche**

1. Verfahren zur Messung der Abschreckgeschwindigkeit von flüssigen Abschreckbädern, insbesondere von Salzbädern, durch Einbringen eines gegenüber der Badtemperatur auf Übertemperatur erhitzten Prüfkörpers in das Bad, dadurch gekennzeichnet, daß mittels einer regelbaren Heizung auf einer Teilfläche des Prüfkörperoberfläche eine konstante Übertemperatur von 50 bis 700 °C aufgebracht und die für die Temperaturkonstanthaltung erforderliche Leistung als Maß für die Abschreckgeschwindigkeit verwendet wird.

2. Verfahren zur Messung der Abschreckgeschwindigkeit von Anspruch 1, dadurch gekennzeichnet, daß die Übertemperatur der Teilfläche gegenüber der Badtemperatur 150 bis 400 °C beträgt.

3. Verfahren zur Messung der Abschreckgeschwindigkeit nach Anspruch 1 und 2, dadurch gekennzeichnet, daß die auf Übertemperatur gebrachte Teilfläche der Prüfkörperoberfläche 0,1 bis 10 cm$^2$ beträgt.

4. Verfahren zur Messung der Abschreckgeschwindigkeit nach Anspruch 1 bis 3, dadurch gekennzeichnet, daß die auf Übertemperatur gebrachte Teilfläche eine Größe von 1 bis 6 cm$^2$ besitzt.

5. Verfahren zur Messung der Abschreckgeschwindigkeit nach Anspruch 1 bis 4, dadurch gekennzeichnet, daß sich, die erhitzte Teilfläche auf einer ebenen Prüfkörperoberfläche befindet und diese schräg im Bad fest angeordnet ist.

6. Vorrichtung zur Durchführung des Verfahrens nach Anspruch 1 bis 5, bestehend aus einem dichten, gegenüber der Badflüssigkeit beständigen Prüfkörpergehäuse (1), einer Heizung (5), einem Temperatursensor (6), und entsprechenden Steuerungseinrichtungen, dadurch gekennzeichnet, daß innerhalb des Prüfkörpergehäuses (1) wärmeisoliert ein regelbar beheizter Wärmeübertragungskörper (2) angeordnet ist, der über seine Stirnfläche (3) mit dem Prüfkörpergehäuse (1) wärmeleitend verbunden ist.

7. Vorrichtung zur Messung der Abschreckgeschwindigkeit nach Anspruch 6, dadurch gekennzeichnet, daß der Wärmeübertragungskörper (1) mit einem Zapfen (4) versehen ist, dessen Stirnfläche (3) mit dem Prüfkörpergehäuse (1) wärmeleitend verbunden ist.

8. Vorrichtung zur Messung der Abschreckgeschwindigkeit nach Anspruch 7, dadurch gekennzeichnet, daß die regelbare Heizung (5) innerhalb des Wärmeübertragungskörpers (2) angeordnet ist.

9. Vorrichtung zur Messung der Abschreckgeschwindigkeit nach Anspruch 8, dadurch gekennzeichnet, daß die Stirnfläche (3) des Wärmeübertragungskörpers (2) bzw. des Zapfens (4) eine Größe von 0,1 bis 10 cm$^2$ aufweist.

10. Vorrichtung zur Messung der Abschreckgeschwindigkeit nach Anspruch 9, dadurch gekennzeichnet, daß die Wand des Prüfkörpergehäuses (1) im Bereich der Stirnfläche (3) des Wärmeübertragungskörpers (2) bzw. des Zapfens (4) aus einem Material mit schlechter Wärmeleitfähigkeit besteht.

**Claims**

1. A process for measuring the chilling rate of liquid chilling baths, in particular of salt baths, by introducing into the bath a test piece which is heated to excess temperature relative to the bath temperature, characterised in that a constant excess temperature of from 50 to 700 °C is applied by means of an adjustable heater on a partial area of the test piece surface and the power required for maintaining the temperature at a constant level is used as a gauge of the chilling rate.

2. A process for measuring the chilling rate of claim 1, characterised in that the excess temperature of the partial area relative to the bath temperature is from 150 to 400 °C.

3. A process for measuring the chilling rate according to claims 1 and 2, characterised in that the partial area of the test piece surface brought to excess temperature is from 0.1 to 10 cm².

4. A process for measuring the chilling rate according to claims 1 to 3, characterised in that the partial area brought to excess temperature has a size of from 1 to 6 cm².

5. A process for measuring the chilling rate according to claims 1 to 4, characterised in that the heated partial area is located on a level test piece surface and the level test piece surface is fixed obliquely in the bath.

6. An apparatus for carrying out the process according to claims 1 to 5 consisting of an impervious test piece housing (1) which is stable to the bath liquid, a heater (5), a temperature sensor (6) and suitable control units, characterised in that an adjustably heated heat transfer member (2) is arranged in thermally insulated manner inside the test piece housing (1) and is connected in thermally conducting manner via its end face (3) to the test piece housing (1).

7. An apparatus for measuring the chilling rate according to claim 6, characterised in that the heat transfer member (1) is provided with a pin (4) whose end face (3) is connected in thermally conducting manner to the test piece housing (1).

8. An apparatus for measuring the chilling rate according to claim 7, characterised in that the adjustable heater (5) is arranged inside the heat transfer member (2).

9. An apparatus for measuring the chilling rate according to claim 8, characterised in that the end face (3) of the heat transfer member (2) or pin (4) has a size of from 0.1 to 10 cm².

10. An apparatus for measuring the chilling rate according to claim 9, characterised in that the wall of the test piece housing (1) in the region of the end face (3) of the heat transfer member (2) or of the pin (4) is composed of a material which is a poor conductor of heat.

**Revendications**

1. Procédé pour mesurer la vitesse de trempe de bains de trempe liquides, en particulier de bains de sels, par introduction sur le bain d'une pièce d'essai chauffée à une température en excès par rapport à celle du bain, procédé caractérisé en ce que l'on applique, au moyen d'un chauffage réglable, sur une surface partielle de la surface de la pièce d'essai, une température constante, en excès de 50 à 700 °C, et que l'on utilise la puissance nécessaire pour maintenir cette température constante comme dimension de la vitesse de trempe.

2. Procédé pour mesurer la vitesse de trempe suivant la revendication 1, caractérisé en ce que l'excès de température de la surface partielle par rapport à la température du bain est de 150 à 400 °C.

3. Procédé pour mesurer la vitesse de trempe suivant les revendications 1 et 2, caractérisé en ce que la surface de la partie de la pièce d'essai que l'on amène à une température en excès se monte à 0,1 à 10 cm².

4. Procédé pour mesurer la vitesse de trempe suivant les revendications 1 à 3, caractérisé en ce que la surface partielle, qui est amenée à une température en excès, a une grandeur de 1 à 6 cm².

5. Procédé pour mesurer la vitesse de trempe suivant les revendications 1 à 4, caractérisé en ce que la surface partielle chauffée se trouve sur une surface plane de la pièce d'essai, et que cette dernière est disposée obliquement immobile sur le bain.

6. Dispositif pour l'exécution du procédé suivant les revendications 1 à 5, constitué d'un corps (1) de la pièce d'essai étanche résistant par rapport au liquide du bain, un chauffage (5), un détecteur de la température (6) et des dispositifs de commande appropriés, caractérisé en ce que, à l'intérieur du corps (1) de la pièce d'essai, est placée, isolée de la chaleur, une pièce (2) de transmission de la chaleur chauffée d'une façon réglable, qui est reliée par sa surface frontale (3), d'une façon conductrice de la chaleur, avec le corps (1) de la pièce d'essai.

7. Dispositif pour mesurer la vitesse de trempe suivant la revendication 6, caractérisé en ce que le corps de transmission de la chaleur (1) est pourvu d'un téton (4), dont la surface frontale (3) est reliée, d'une façon conductrice de la chaleur, avec le corps (1) de la pièce d'essai.

8. Dispositif pour mesurer la vitesse de trempe suivant la revendication 7, caractérisé en ce que le chauffage réglable (5) est placé à l'intérieur du corps (2) de transmission de la chaleur.

9. Dispositif pour mesurer la vitesse de trempe suivant la revendication 8, caractérisé en ce que la surface frontale (3) de la pièce de transmission de la chaleur (2), ou du téton (4), présente une grandeur de 0,1 à 10 cm².

10. Dispositif pour mesurer la vitesse de trempe suivant la revendication 9, caractérisé en ce que la paroi du corps (1) de la pièce d'essai est constituée, dans la zone de la surface frontale (3) de la pièce de transmission de chaleur (2) ou du téton (4), d'une matière dont la conductivité thermique est mauvaise.

Fig. I